# DEMANDE DE BREVET EUROPEEN

(11) **EP 4 752 743 A1**
(43) Date de publication de la demande: **03.06.2026**
(21) Numéro de dépôt: 24306985.3
(22) Date de dépôt: 27.11.2024
(51) Int. Cl.: G06F 16/00

(54) **PROCÉDÉ DE GÉNÉRATION D'OBJETS TRIDIMENSIONNELS**

(71) Demandeur: BULL SAS, 78340 Les Clayes-Sous-Bois (FR)
(72) Inventeur: DRUART, Anaïs, 38100 GRENOBLE (FR); ARNAISE, Nicolas, 38300 Bourgoin-Jallieu (FR); DEVEZE, Louis, 38600 FONTAINE (FR)
(74) Mandataire: IPAZ

(57) **Abrégé**

L'invention concerne un procédé (20) de génération d'objets tridimensionnels, comportant les étapes :
- extraction (24), comprenant :
• une génération d'une consigne textuelle de recherche, dans un contexte textuel descriptif d'une apparence d'un objet tridimensionnel, d'une valeur d'au moins un attribut prédéterminé ; et
• une fourniture, en entrée d'un modèle de langage (10), de la consigne textuelle générée, pour y identifier une valeur de chaque attribut prédéterminé, formant une annotation extraite correspondante ;

- fourniture, en entrée d'un modèle génératif *text-to-3D* (8), du contexte textuel, pour générer un objet tridimensionnel brut ; et
- stockage de l'objet tridimensionnel brut, en association avec chaque annotation extraite correspondante, en tant qu'objet tridimensionnel généré.

## Description

### Domaine technique

La présente invention concerne un procédé de génération d'objets tridimensionnels.

L'invention concerne également un programme d'ordinateur et un dispositif mettant en oeuvre un tel procédé.

L'invention s'applique au domaine de l'informatique, et plus précisément à la génération d'objets tridimensionnels par ordinateur.

### État de la technique

Il est connu de générer des scènes tridimensionnelles afin de créer des images synthétiques, en particulier destinées à l'entraînement de modèles d'intelligence artificielle, notamment des modèles de vision par ordinateur.

Une telle approche, bien qu'offrant un contrôle total sur la scène représentée, nécessite généralement une grande quantité d'objets tridimensionnels (ou « objets 3D ») pour peupler ladite scène tridimensionnelle, en particulier si l'on souhaite une scène large et réaliste.

De façon classique, de tels objets 3D sont acquis, soit directement auprès d'un artiste 3D, soit en ligne auprès de banques d'objets 3D.

Néanmoins, une telle approche ne donne pas entière satisfaction.

En effet, la modélisation de plusieurs scènes tridimensionnelles réalistes requiert l'acquisition d'une quantité importante d'objets 3D, ce qui se traduit par des coûts prohibitifs.

En outre, ces objets 3D, provenant de sources diverses, ne répondent généralement pas aux mêmes normes de rangement et/ou de nommage, ce qui implique, pour l'utilisateur désireux de générer des scènes tridimensionnelles, un coût humain (financier et temporel) supplémentaire afin de garantir, lors de l'achat de chaque objet 3D, une homogénéité de sa base de données d'objets 3D.

En outre, le recours à des banques d'objets 3D gratuits n'est pas envisageable, dans la mesure où de tels objets 3D présentent souvent une qualité insuffisante et/ou une variété limitée.

Un but de la présente invention est de remédier à au moins un des inconvénients de l'état de la technique.

Un autre but de l'invention est de proposer un procédé de génération d'objets 3D apte à produire des objets 3D peu onéreux, de bonne qualité, et dont les métadonnées respectent des règles de formatage préalablement imposées par un utilisateur.

### Exposé de l'invention

À cet effet, l'invention concerne un procédé du type précité, mis en oeuvre par ordinateur et comportant :
- une étape d'extraction comportant :
   - une génération, à partir d'au moins un attribut prédéterminé et d'un contexte textuel descriptif d'une apparence d'un objet tridimensionnel à générer, d'une consigne textuelle de recherche, dans ledit contexte textuel, d'une valeur de chaque attribut prédéterminé ; et
   - une fourniture, en entrée d'un modèle de langage, de la consigne textuelle générée,
   une valeur identifiée par le modèle de langage, dans le contexte textuel, de chaque attribut prédéterminé, formant une annotation extraite correspondante ;
- une étape de création comportant une fourniture, en entrée d'un modèle génératif *text-to-3D,* du contexte textuel,
   une sortie du modèle génératif *text-to-3D* formant un objet tridimensionnel brut ; et
- une étape de stockage de l'objet tridimensionnel brut, en association avec chaque annotation extraite correspondante, en tant qu'objet tridimensionnel généré.

En effet, le recours au modèle génératif *text-to-image* confère la capacité de générer des objets tridimensionnels selon les besoins spécifiques de l'utilisateur, indiqués dans le contexte textuel. De cette façon, un large éventail de catégories est accessible, et la génération rapide d'objets tridimensionnels est possible.

En outre, l'utilisation du modèle de langage, conjointement au modèle génératif, autorise une extraction automatique des attributs de l'objet tridimensionnel créé. Il en résulte une organisation automatique, uniforme et constante de l'emplacement mémoire de stockage des objets tridimensionnels générés.

De façon avantageuse, le procédé selon l'invention présente une ou plusieurs des caractéristiques suivantes, prises isolément ou selon toute combinaison techniquement possible :

le procédé comprend une modification d'un maillage de l'objet tridimensionnel brut, préalablement à son stockage ;

la modification du maillage de l'objet tridimensionnel brut comprend la mise en oeuvre d'au moins un traitement parmi :
- une délétion d'arêtes présentant, entre elles, une distance inférieure à une distance minimale prédéterminée ;
- un lissage d'angles ; et/ou
- une décimation de l'effondrement de bords quadriques ;

le procédé comprend, préalablement à l'étape de création, une sélection du modèle génératif *text-to-3D* parmi une pluralité de modèles génératifs *text-to-3D* prédéterminés ;

le procédé comprend :
- préalablement à l'étape de création, en réponse à une requête d'utilisation émise par un utilisateur, création d'un conteneur courant à partir d'une image comprenant une version préalablement paramétrée du modèle génératif *text-to-3D* et, de préférence, au moins une librairie annexe ; et
- après l'étape de stockage, en réponse à une requête de fin d'utilisation émise par l'utilisateur, suppression du conteneur courant ;

l'image comprend, en outre, une version préalablement paramétrée du modèle de langage.

Selon un autre aspect de l'invention, il est proposé un programme d'ordinateur comprenant des instructions exécutables qui, lorsqu'elles sont exécutées par ordinateur, mettent en oeuvre les étapes du procédé tel que défini ci-dessus.

Le programme d'ordinateur peut être en tout langage informatique, tel que par exemple en langage machine, en C, C++, JAVA, Python, etc.

Selon un autre aspect de l'invention, il est proposé un dispositif informatique pour la génération d'objets tridimensionnels, le dispositif informatique comportant :
- une mémoire configurée pour stocker un modèle génératif *text-to-3D* et un modèle de langage ; et
- une unité de traitement configurée pour :
   - générer, à partir d'au moins un attribut prédéterminé et d'un contexte textuel descriptif d'une apparence d'un objet tridimensionnel à générer, une consigne textuelle de recherche, dans ledit contexte textuel, d'une valeur de chaque attribut prédéterminé ;
   - fournir le contexte textuel en entrée d'un modèle génératif *text-to-3D,* une sortie du modèle génératif *text-to-3D* formant un objet tridimensionnel brut ;
   - fournir, en entrée du modèle de langage, la consigne textuelle générée,
      une valeur identifiée par le modèle de langage, dans le contexte textuel, de chaque attribut prédéterminé, formant une annotation extraite correspondante ; et
   - écrire, dans la mémoire, l'objet tridimensionnel brut en association avec chaque annotation extraite correspondante, en tant qu'objet tridimensionnel généré.

Le dispositif selon l'invention peut être tout type d'appareil tel qu'un serveur, un ordinateur, une tablette, un calculateur, un processeur, une puce informatique, programmé pour mettre en oeuvre le procédé selon l'invention, par exemple en exécutant le programme d'ordinateur selon l'invention.

### Brève description des figures

L'invention sera mieux comprise à la lecture de la description qui va suivre, donnée uniquement à titre d'exemple non limitatif et faite en se référant aux dessins annexés sur lesquels :
la figure 1 est une représentation schématique d'un dispositif informatique selon l'invention ; et
la figure 2 est un ordinogramme d'un procédé de génération d'objets tridimensionnels mis en oeuvre par le dispositif informatique de la figure 1.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

### Description détaillée

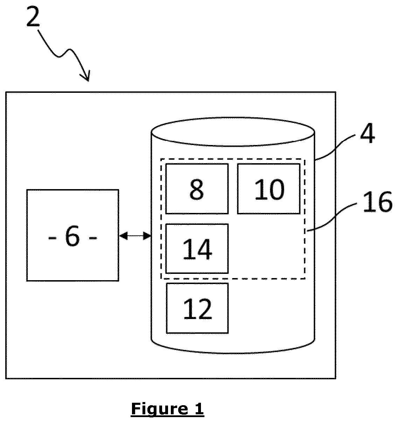

Un dispositif informatique 2 selon l'invention est illustré par la figure 1.

Le dispositif informatique 2 comporte une mémoire 4 et une unité de traitement 6 reliées entre elles.

### Mémoire 4

La mémoire 4 est configurée pour stocker au moins un modèle génératif 8, ainsi qu'un modèle de langage 10.

En outre, la mémoire comprend un emplacement 12 de stockage d'objets tridimensionnels (dit « emplacement de stockage »).

De façon avantageuse, la mémoire 4 est également configurée pour stocker un logiciel 14 de post-traitement d'objet tridimensionnel (dit « logiciel de post-traitement »).

### Modèle génératif 8

Le modèle génératif 8 est un modèle génératif *text-to-3D.*

Plus précisément, un tel modèle est adapté pour recevoir, en entrée, un contexte textuel descriptif d'une apparence d'un objet tridimensionnel à générer, et pour produire, en sortie, un objet tridimensionnel correspondant audit contexte textuel.

En particulier, le contexte textuel comprend des attributs souhaités pour l'objet tridimensionnel à générer. De tels attributs sont, par exemple, indicatifs du type d'objet tridimensionnel, ou encore d'autres aspects liés à son apparence et/ou à ses propriétés physiques, comme ses dimensions (hauteur, largeur et/ou profondeur), sa couleur, sa capacité à supporter d'autres objets, sa texture, son style graphique, des positions relatives de ses parties (cas d'un objet articulé), etc.

Par exemple, le modèle génératif 8 est le modèle DreamFusion, tel que décrit par Ben Poole et al., dans la prépublication digitale « DreamFusion: Text-to-3D using 2D Diffusion », référencée arXiv:2209.14988.

Un tel modèle de diffusion se distingue par sa capacité à générer des objets rapidement (environ 20 minutes avec la configuration par défaut), avec relativement peu d'anomalies. En outre, le modèle DreamFusion présente la faculté de générer des objets relevant du vivant (plantes, animaux).

En alternative, ou de façon complémentaire, le modèle génératif 8 est le modèle Magic3D, tel que décrit par Chen-Hsuan Lin et al., dans la prépublication digitale « Magic3D: High-Resolution Text-to-3D Content Création », référencée arXiv:2211.10440.

Un tel modèle est également apte à générer des objets rapidement (environ 45 minutes avec la configuration par défaut), et avec un nombre restreint d'arêtes. Il présente, en outre, l'avantage de générer les objets du quotidien (sacs, meubles, outils, etc.) de manière plus réaliste que le modèle Dream Fusion.

### Modèle de langage 10

Le modèle de langage 10 a été préalablement entraîné pour capturer la sémantique d'un texte en langage naturel fourni à son entrée.

En particulier, le modèle de langage 10 est un grand modèle de langage (ou LLM, de l'anglais « *Large Language Model* »).

Par exemple, le modèle de langage 10 est le modèle Llama 3.2 tel que décrit par Dubey Abhimanyu et al. dans la prépublication digitale « The Llama 3 Herd of Models », référencée arXiv: 2407.21783.

En particulier, le modèle de langage 10 est adapté :
- pour recevoir, en entrée, une consigne textuelle de recherche, dans un texte donné, d'une valeur d'au moins une catégorie prédéterminée ; et
- pour fournir, en sortie, une valeur identifiée, dans ledit texte, pour chaque catégorie prédéterminée.

### Logiciel de post-traitement 14

Le logiciel de post-traitement 14 est configuré pour modifier un maillage d'un objet tridimensionnel fourni en entrée.

De préférence, le logiciel de post-traitement 14 est configuré pour modifier le maillage de l'objet tridimensionnel par la mise en oeuvre d'au moins un traitement parmi :
- une délétion d'arêtes présentant, entre elles, une distance inférieure à une distance minimale prédéterminée ;
- un lissage d'angles ; et/ou
- une décimation de l'effondrement de bords quadriques (ou « *Quadric Edge Collapse Decimation* » en anglais).

Une telle caractéristique est avantageuse, dans la mesure où elle conduit souvent à un allègement conséquent de l'objet tridimensionnel, réduisant ainsi l'espace qu'il occupe dans la mémoire 4.

Avantageusement, le modèle génératif 8 et le modèle de langage 10 sont conjointement stockés dans un fichier archive 16, dit « image ». Une telle image 16 présente des caractéristiques appropriées pour la génération d'au moins une instance dans laquelle le modèle génératif 8 est susceptible d'être mis en oeuvre. Une telle instance est dite « conteneur ».

Avantageusement, le modèle de langage 10 est également stocké dans l'image, conjointement au modèle génératif 8. Dans ce cas, l'image 16 présente, en outre, des caractéristiques appropriées pour que le modèle génératif 8 soit susceptible d'être mis en oeuvre dans l'instance générée.

Par exemple, l'image 16 est une image Docker, exploitée au moyen du logiciel Docker Engine développée par la société Docker, Inc.

Dans ce cas, chacun du modèle génératif 8 et du modèle de langage 10 dans l'image 16 présentent une configuration prédéterminée, par exemple conférant des performances optimales pour un cas d'usage spécifique.

Les avantages du recours à une telle image seront décrits ultérieurement.

De préférence, l'image 16 comprend également toute libraire annexe nécessaire à la mise en oeuvre des modèles 8, 10.

De préférence encore, l'image 16 comprend, en outre, le logiciel de post-traitement 14.

### Unité de traitement 6

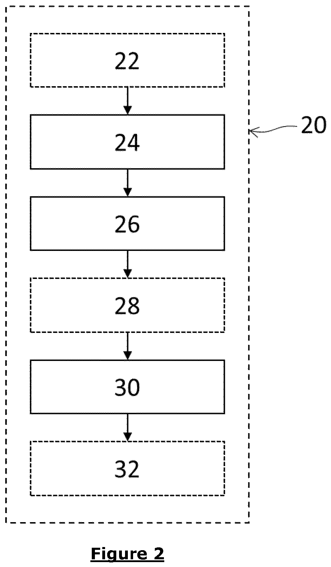

L'unité de traitement 6 est configurée pour mettre en oeuvre un procédé 20 de génération d'objets tridimensionnels (dit « procédé de génération 3D »), illustré par la figure 2.

Comme cela apparaît sur cette figure, le procédé de génération 3D 20 comprend une étape d'extraction 24, une étape de création 26 et une étape de stockage 30.

De préférence, le procédé de génération 3D 20 comprend, en outre, une étape 22 de création de conteneur, antérieure à l'étape de création 26. Dans ce cas, le procédé de génération 3D 20 comprend également une étape 32 de suppression de conteneur, postérieure à l'étape de stockage 30.

De préférence encore, le procédé de génération 3D 20 comprend également une étape de modification 28, entre l'étape de création 26 et l'étape de stockage 30.

La succession des étapes 24 à 32 est susceptible d'être réalisée une pluralité de fois, chaque itération correspondant à la génération d'un nouvel objet tridimensionnel.

### Etape de création de conteneur 22

De préférence, dans le cas où le modèle génératif 8 (et, de préférence, le modèle de langage 10) est stocké dans une image 16, l'unité de traitement 6 est configurée pour créer, au cours de l'étape de création de conteneur 22, un conteneur courant à partir de l'image 16.

En particulier, l'unité de traitement 6 est configurée pour créer le conteneur courant, à partir de l'image 16, en réponse à une requête d'utilisation émise par un utilisateur.

### Etaoe d'extraction 24

L'unité de traitement 6 est configurée pour attendre, au cours de l'étape d'extraction 24, la saisie, par l'utilisateur, d'un contexte textuel descriptif d'une apparence d'un objet tridimensionnel à générer.

À titre d'exemple, un tel contexte textuel est : « *une grande table de jardin blanche réaliste* ».

En outre, en cas de réception d'un tel contexte textuel, l'unité de traitement 6 est configurée pour générer une consigne textuelle correspondante.

Plus précisément, l'unité de traitement 6 est configurée pour générer la consigne textuelle à partir du contexte textuel saisi par l'utilisateur et d'au moins un attribut prédéterminé.

Plus précisément encore, la consigne textuelle est une consigne textuelle de recherche d'une valeur de chaque attribut prédéterminé, dans le contexte textuel.

Par exemple, dans le cas du contexte textuel indiqué précédemment, la consigne textuelle est : « *détermine la valeur prise par chacun parmi : une catégorie, une sous-catégorie, une capacité à supporter d'autres objets (vrai ou faux), une hauteur en mètres, une largeur en mètres, et une couleur, à partir du texte suivant : 'une grande table de jardin blanche réaliste' ».*

L'unité de traitement 6 est également configurée pour fournir, en entrée du modèle de langage 10, la consigne textuelle générée.

Dans ce cas, une valeur identifiée par le modèle de langage 10, dans le contexte textuel, de chaque attribut prédéterminé, forme une annotation extraite correspondante.

Dans le cas des attributs de la consigne textuelle fournis en exemple, les annotations obtenues sont :
- catégorie : mobilier ;
- sous-catégorie : table ;
- capacité à supporter d'autres objets : vrai ;
- hauteur en mètres : 1,3 ;
- largeur en mètres : 1,5 ; et
- couleur : blanc.

L'étape d'extraction 24 est susceptible d'être mise en oeuvre avant, après, ou parallèlement à l'étape 26 de création d'un objet tridimensionnel brut. De préférence, l'étape d'extraction 24 est mise en oeuvre avant l'étape 26 de création de l'objet tridimensionnel brut, et plus précisément dès le moment où l'utilisateur saisit le contexte textuel descriptif de l'apparence de l'objet tridimensionnel à générer.

### Etape de création 26

De préférence, dans le cas où la mémoire 4 stocke une pluralité de modèles génératifs *text-to-3D* prédéterminés, l'étape de création 26 est précédée d'une sélection du modèle génératif à mettre en oeuvre parmi ladite pluralité de modèles génératifs.

En outre, de façon optionnelle, la mise en oeuvre de l'étape de création 26 est précédée d'un paramétrage manuel, par l'utilisateur, du modèle génératif 10.

Un tel paramétrage correspond, par exemple, à un format souhaité pour l'objet tridimensionnel brut à créer.

En outre, en cas de réception d'un tel contexte textuel, l'unité de traitement 6 est configurée pour fournir, en entrée du modèle génératif 8, le contexte textuel reçu.

Dans ce cas, une sortie du modèle génératif 8 forme un objet tridimensionnel brut.

### Etaoe de modification 28

De préférence, l'unité de traitement 6 est configurée pour, au cours de l'étape de modification 28, mettre en oeuvre le logiciel de traitement 14 sur la base de l'objet tridimensionnel brut fourni en sortie par le modèle génératif 8.

Il en résulte un objet tridimensionnel brut mis à jour par modification du maillage correspondant.

### Etaoe de stockage 30

L'unité de traitement 6 est également configurée pour, au cours de l'étape de stockage 30, écrire, dans la mémoire 4, l'objet tridimensionnel brut obtenu, en association avec les annotations extraites correspondantes, dans l'emplacement de stockage 12.

L'ensemble comprenant l'objet tridimensionnel brut et les annotations correspondantes forme l'objet tridimensionnel généré.

De préférence, dans le cas où l'emplacement de stockage 12 présente une structure de base de données, l'unité de traitement 6 est configurée pour stocker chaque annotation dans l'espace mémoire de la base de données qui est relatif à l'attribut correspondant.

### Etape de suppression de conteneur 32

De préférence, l'unité de traitement 6 est configurée pour, au cours de l'étape de suppression de conteneur 32, en réponse à une requête de fin d'utilisation émise par l'utilisateur, supprimer le conteneur courant.

La mise en oeuvre de tels conteneurs, avec des modèles 8, 10 préalablement paramétrés, est avantageuse, dans la mesure où elle diminue drastiquement les coûts liés à l'utilisation des processeurs graphiques nécessaires, notamment, au fonctionnement du modèle génératif.

En contrepartie, un premier temps d'utilisation un peu plus long est répercuté sur l'utilisateur, dans le cas où il souhaite appliquer ses propres paramétrages aux modèles 8, 10.

### Fonctionnement

Le fonctionnement du dispositif informatique 2 va maintenant être décrit, en référence à la figure 2.

De préférence, dans le cas où le modèle génératif 8 et le modèle de langage 10 sont stockés dans une image 16, l'unité de traitement 6 crée, au cours de l'étape de création de conteneur 22, un conteneur courant à partir de ladite image 16.

En particulier, l'unité de traitement 6 crée le conteneur courant en réponse à une requête d'utilisation émise par un utilisateur.

Puis, de préférence, dans le cas où la mémoire 4 stocke une pluralité de modèles génératifs prédéterminés, l'utilisateur sélectionne un modèle génératif à mettre en oeuvre.

Puis, de façon optionnelle, l'utilisateur paramètre le modèle génératif 10 (en particulier le modèle génératif 10 choisi).

Puis, au cours de l'étape d'extraction 24, en réponse à la saisie, par l'utilisateur, d'un contexte textuel descriptif d'une apparence d'un objet tridimensionnel à générer, l'unité de traitement 6 génère une consigne textuelle à partir dudit contexte textuel saisi et d'au moins un attribut prédéterminé.

Puis, l'unité de traitement 6 fournit, en entrée du modèle de langage 10, la consigne textuelle générée. Il en résulte, en sortie du modèle de langage 10, pour chaque attribut prédéterminé, une annotation extraite correspondante.

En outre, au cours de l'étape de création 26, l'unité de traitement 6 fournit, en entrée du modèle génératif 8, let contexte textuel saisi par l'utilisateur. Il en résulte, en sortie du modèle génératif 8, un objet tridimensionnel brut.

Puis, de préférence, au cours de l'étape de modification 28, l'unité de traitement 6 met en oeuvre le logiciel de traitement 14 pour mettre à jour ledit objet tridimensionnel brut délivré par le modèle génératif 8.

Puis, au cours de l'étape de stockage 30, l'unité de traitement 6 écrit, dans l'emplacement de stockage 12 de la mémoire 4, l'objet tridimensionnel brut obtenu, en association avec les annotations extraites correspondantes. L'ensemble comprenant l'objet tridimensionnel brut et les annotations correspondantes forme l'objet tridimensionnel généré.

Puis, de préférence, au cours de l'étape de suppression de conteneur 32, en réponse à une requête de fin d'utilisation émise par l'utilisateur, l'unité de traitement 6 supprime le conteneur courant.

Bien entendu l'invention n'est pas limitée aux exemples qui viennent d'être décrits.

## Revendications

1. Procédé (20) de génération d'objets tridimensionnels, le procédé étant mis en oeuvre par ordinateur et comportant :
- une étape d'extraction (24) comportant :
• une génération, à partir d'au moins un attribut prédéterminé et d'un contexte textuel descriptif d'une apparence d'un objet tridimensionnel à générer, d'une consigne textuelle de recherche, dans ledit contexte textuel, d'une valeur de chaque attribut prédéterminé ; et
• une fourniture, en entrée d'un modèle de langage (10), de la consigne textuelle générée,
une valeur identifiée par le modèle de langage (10), dans le contexte textuel, de chaque attribut prédéterminé, formant une annotation extraite correspondante ;
- une étape de création (26) comportant une fourniture, en entrée d'un modèle génératif *text-to-3D* (8), du contexte textuel,
une sortie du modèle génératif *text-to-3D* (8) formant un objet tridimensionnel brut ; et
- une étape (30) de stockage de l'objet tridimensionnel brut, en association avec chaque annotation extraite correspondante, en tant qu'objet tridimensionnel généré.

2. Procédé selon la revendication 1, comprenant une modification (28) d'un maillage de l'objet tridimensionnel brut, préalablement à son stockage.

3. Procédé selon la revendication 2, dans lequel la modification du maillage de l'objet tridimensionnel brut comprend la mise en oeuvre d'au moins un traitement parmi :
- une délétion d'arêtes présentant, entre elles, une distance inférieure à une distance minimale prédéterminée ;
- un lissage d'angles ; et/ou
- une décimation de l'effondrement de bords quadriques.

4. Procédé selon l'une quelconque des revendications 1 à 3, comprenant, préalablement à l'étape de création (26), une sélection du modèle génératif *text-to-3D* (8) parmi une pluralité de modèles génératifs *text-to-3D* prédéterminés.

5. Procédé selon l'une quelconque des revendications 1 à 4, comprenant :
- préalablement à l'étape de création (26), en réponse à une requête d'utilisation émise par un utilisateur, création (22) d'un conteneur courant à partir d'une image comprenant une version préalablement paramétrée du modèle génératif *text-to-3D* (8) et, de préférence, au moins une librairie annexe ; et
- après l'étape de stockage, en réponse à une requête de fin d'utilisation émise par l'utilisateur, suppression (32) du conteneur courant.

6. Procédé selon la revendication 5, dans lequel l'image comprend, en outre, une version préalablement paramétrée du modèle de langage (10).

7. Programme d'ordinateur comprenant des instructions exécutables qui, lorsqu'elles sont exécutées par ordinateur, mettent en en oeuvre les étapes du procédé selon l'une quelconque des revendications 1 à 6.

8. Dispositif informatique (2) pour la génération d'objets tridimensionnels, le dispositif informatique comportant :
- une mémoire (4) configurée pour stocker un modèle génératif *text-to-3D* (8) et un modèle de langage (10) ; et
- une unité de traitement (6) configurée pour :
• générer, à partir d'au moins un attribut prédéterminé et d'un contexte textuel descriptif d'une apparence d'un objet tridimensionnel à générer, une consigne textuelle de recherche, dans ledit contexte textuel, d'une valeur de chaque attribut prédéterminé ;
• fournir le contexte textuel en entrée d'un modèle génératif *text-to-3D* (8), une sortie du modèle génératif *text-to-3D* (8) formant un objet tridimensionnel brut ;
• fournir, en entrée du modèle de langage (10), la consigne textuelle générée,
une valeur identifiée par le modèle de langage (10), dans le contexte textuel, de chaque attribut prédéterminé, formant une annotation extraite correspondante ; et
• écrire, dans la mémoire (4), l'objet tridimensionnel brut en association avec chaque annotation extraite correspondante, en tant qu'objet tridimensionnel généré.
